# EUROPEAN PATENT SPECIFICATION

(11) **EP 1 732 352 B1**
(45) Date of publication and mention of the grant of the patent: **21.10.2015**
(21) Application number: 05009470.5
(22) Date of filing: 29.04.2005
(51) Int. Cl.: H04R 3/00, G10L 21/02

(54) **Detection and suppression of wind noise in microphone signals**
Erkennung und Unterdrückung von Windgeräuschen in Mikrofonsignalen
Réduction et suppression du bruit caractéristique du vent dans des signaux de microphones

(43) Date of publication of application: 13.12.2006
(73) Proprietor: Nuance Communications, Inc., Burlington, MA 01803-4613 (US); QNX Software Systems (Wavemakers), Inc., Vancouver BC V6B 2K4 (CA)
(72) Inventor: Haulick, Tim, 89143 Blaubeuren (DE); Buck, Markus, 88400 Biberach an der Riss (DE); Hetherington, Phil, Port Moody British Columbia V3H 5H7 (CA); Haindl, Klaus, Vienna 1160 (AT)
(74) Representative: Grünecker Patent- und Rechtsanwälte PartG mbB

(56) References cited:
- EP-A- 1 078 818
- WO-A-00/21194
- WO-A-02/065735
- US-A- 4 420 655
- US-A- 5 058 171
- US-A1- 2002 037 088
- US-A1- 2004 185 804
- US-A1- 2005 041 825

## Description

### Field of Invention

The present invention relates to noise reduction in speech communication and, in particular, to the reduction of wind noise in hands-free sets.

### Prior Art

Microphones are subject to environmental noise and, in particular, non-acoustic perturbations as wind noise. Wind noise is, e.g., caused by vibrations of the diaphragm of the microphone due to wind. By air turbulence in the vicinity of the microphone low frequency noise, as in the form of popps, is caused that deteriorates the microphone signals. Consequently, speech signals detected by the microphone and sent to a receiver can become unintelligible.

Wind and vibrational noise represent a cumbersome problem in outdoor use of microphones and in car communication systems used for telephony or speech recognizing means, in particular, if hands-free sets are employed. Vibrational noise in microphones installed in vehicular cabins result, e.g., from engine vibration.

In vehicles, directional microphones are used to reduce noise in dependence of the direction of noise sources. On the other hand, directional microphones are rather sensitive to wind noise. Wind noise can be caused by blowers. In some vehicles microphones are placed in a way that the air ejected from blower jets may hit the microphones directly. Open windows, an open sliding roof and an open cabriolet hood represent other sources of wind noise.

US -A- 4 420 655 discloses a circuit for compensating for frequency characteristic of microphone output which is arranged to have a combination of a microphone member of the pressure gradient type having a proximity effect represented by a rise in its low frequency range sensitivity as the microphone member approaches closer to a source of sound, and another microphone member of the pressure type developing no proximity effect, to cancel out the occurrence of proximity effect. A change in sensitivity of the pressure gradient type microphone in the low frequency range due to the proximity effect is determined from the level difference between the outputs of the two microphones. A signal representative of the difference is subtracted from the output of the pressure gradient type microphone thereby to effect a compensation for the proximity effect in the output of the pressure gradient type microphone

US -A- 5 058 171 discloses a microphone arrangement comprising at least two individual microphones arranged closely next to each other, whose individual microphones depending on the recording angle desired for the sound recording are a pressure-and/or a pressure gradient receiver and/or a directional line microphone. The wind pressure is continuously measured during the sound recording by means of a microphone with downstream switched electronic circuit and depending on the respectively prevailing wind pressure always that microphone remains switched to the amplifier assigned to it by an instantaneously controlled switch.

WO 00/21194 discloses a pickup system that utilizes both sound pressure disturbances sensed by a microphone and bone conduction sensed by a vibration sensor such as an accelerometer, velocity sensor or displacement sensor to pick up and transmit a talker's voice. The system senses the microphone signal amplitude and adjusts the gain of associated amplification circuitry to fade in the microphone signal and fade out the vibration sensor signal as ambient noise increases.

One method known in the art to reduce wind noise is to cover microphones by layers of foam. Other mechanical kinds of wind protection means are available. In order to be sufficiently effective, the mechanical wind protection means, however, have to be made relatively bulky. This is particularly disadvantageous in the context of microphones installed in vehicular cabins, since the cabin design and available space simply does not allow for bulky wind protection means around microphones. Moreover, windbreaks tend to degrade the overall performance of the microphones, in particular, of directional microphones. The directivity of the latter usually is reduced when mechanical wind protecting means are applied.

Thus, it is an object of the present invention to provide a microphone system with an improved reduction of non-acoustic perturbations and a method for reduction of non-acoustic perturbations in microphone signals and, in particular, to provide a microphone system with an improved wind noise reduction that can be installed in a vehicular cabin as part of a handsfree set.

### Description of the invention

The above mentioned object is achieved by a microphone system according to claim 1, comprising
at least one directional microphone with a first directivity to obtain a first microphone signal;
at least one directional microphone with a second directivity that is worse (lower) than the first directivity, in particular, an omni-directional microphone, to obtain a second microphone signal;
a detection means configured to receive the first and the second microphone signals and to output a detection signal indicating whether non-acoustic perturbations,
in particular, wind noise, in the first and/or the second microphone signals exceed a predetermined level;
a signal processing means configured to output an output signal generated from the first microphone signal and/or the second microphone signal on the basis of the detection signal;
and
a frequency determining means configured to determine time-dependently a threshold frequency above that only non-acoustic perturbations that do not exceed the predetermined level are detected and wherein the output signal is generated from a portion of the first microphone signal in a frequency range above the threshold frequency and from a portion of the second microphone signal in a frequency range below the threshold frequency.

At least two microphones with different directivities are used. The at least one microphone with the second directivity may be an omni-directional microphone with one single inlet port for sound to enter. Such a microphone senses the instantaneous acoustic pressure at the sound port regardless of where the sound sources are located. An ideal omni-directional microphone will exhibit a polar sensitivity pattern, which is a perfect circle. An omni-directional microphone can be considered as being relatively wind robust, i.e. insensitive to wind noise.

The at least one microphone with the first directivity one shows a directivity index that significantly differs from zero. The directivity index is defined by the log ratio of the power delivered by an omni-directional microphone to that of a directional microphone with equal sensitivity in the principle direction, in a diffuse sound field.

The at least one microphone with the first directivity may be a directional microphone with, e.g., a cardioid or a dipole polar pattern and a directivity index of approximately 4.8 dB.

Non-acoustic perturbations comprise wind noise, vibrational noise, resonances, etc. In particular, the omni-directional microphone may be optimized for wind robustness and may also be provided with additional mechanical wind protection means, e.g., a foam layer. The detection means may physically and/or logically be part of the signal processing means.

Detection of non-acoustic perturbations, in particular, wind noise, above or below a predetermined level may be performed on the basis of the (short-time) power of microphone signals comprising non-acoustic perturbations. For example, the power of the signal from the microphone with the first directivity is compared with the one of the signal of the microphone with the second directivity. If the signal from the (wind robust) microphone with the second (worse) directivity shows a lower power level by some predetermined value than the one from the microphone with the first (better, higher) directivity, it can be determined that non-acoustic perturbations, in particular, wind noise are present.

Thus, the detection means may comprise a comparator configured to compare the power level of the first microphone signal with the one of the second microphone signal and the detection signal may be generated and output on the basis of the comparison result.

The predetermined level above which wind noise significantly deteriorates the microphone signals can be determined empirically and/or on the basis of theoretical calculations. Depending on the specification of the application this level can be chosen to be close to zero. It may also be preferred to provide a selection means, by which a user may select from several levels thereby controlling the sensitivity of the microphone system with respect to the suppression of wind noise.

The signal processing means may at first A/D convert the microphone signals before any further processing. In general, the processing may be performed in the time domain, the frequency domain (after a Fourier transformation) or the subband domain. The signal processing may also be done with analogue signals without using an A/D or D/A converter, respectively.

According to the invention, it is determined whether or not non-acoustic perturbations are present at some given level. The output signal is generated according to the result of this determination process. Since a signal obtained by a microphone with a better directivity is usually more deteriorated by, e.g., wind noise, than a signal obtained by a microphone with a worse directivity, if wind noise is detected, the generation of the output signal may be primarily be carried out taken into account the second microphone signal.

The herein disclosed microphone system shows an improved reduction of non-acoustic perturbations as compared to the prior art. Reliable operation is guaranteed by the generation of an output signal from microphone signals obtained by microphones of different directivity in dependence on the level of non-acoustic perturbations. The microphone system is particularly suitable for installation in a vehicular cabin. In this case, the number of microphones used may be rather limited.

Instead of simply switching between the microphone(s) with the first directivity and the microphone(s) with the second directivity to be used for generating the output signal, both kinds of microphones may be used. The frequency determining means may physically and/or logically be part of the signal processing means.

Since wind noise, e.g., mainly affects the low frequency range, the high frequency range of the output signal above a given threshold frequency may be generated from the first microphone signal regardless of the level of wind noise. On the other hand, the portion of the output signal with a frequency range below the threshold frequency, i.e. in the low frequency range, may be generated from the second microphone signal obtained by the wind robust microphone. The width of the perturbed frequency range, however, depends on the level of the wind noise. In general, depending on the level of wind perturbations, the threshold frequency may be some 500 Hz to some 1000 Hz.

According to a further embodiment of the inventive microphone system the output signal can be generated from a portion of the first microphone signal in a frequency range above a predetermined frequency and from a portion of the second microphone signal in a frequency range below the predetermined frequency, if the detection signal indicates that the non-acoustic perturbations exceed the predetermined level or if no detection signal is output. Even when no detection signal is output at all, the microphone signals may be combined in order to achieve a higher quality. The predetermined frequency may be chosen as 500 Hz, for example.

In some detail, the frequency dependent processing can, e.g., be carried out as follows. The microphone signals are (short-time) Fourier transformed or alternatively processed in subbands (with some undersampling). The resulting complex spectrograms can be further processed with respect to both amplitude and phase. Below the threshold frequency only the phase values of the second microphone signal may be used. As for the amplitude of the output signal for each spectral value the minimum of the respective spectral value of the microphone signal from the at least one microphone with the first directivity and the spectral value of the microphone from the at least one microphone with the second directivity may be used. This allows for automatically selecting for each frequency the amplitude with the lower perturbation for the generation of the output signal. For low frequency portions that do not show wind noise the signal amplitude of the at least one microphone with the first directivity can be used, since this microphone exhibits a better general reduction of background noise than the one with the second directivity.

Thus, according to an embodiment of the inventive microphone system the signal processing means is configured to generate the output signal for frequencies below the threshold frequency on the basis of the phase values of the second microphone signal and/or amplitude values representing for each frequency the minimum of the respective spectral value of the first microphone signal and the respective spectral value of the second microphone signal. In particular, the signal processing means may be configured to generate an output signal that exhibits the same phase values as the second microphone signal and the same amplitudes per frequency as the minimum of the respective spectral value of the first microphone signal and the respective spectral value of the second microphone signal for frequencies below the threshold frequency.

Since the inventive microphone system comprises different kinds of microphones, in general, the frequency responses of the microphones have to be adjusted to each other. The adjustment may be carried out adaptively and preferably when no non-acoustic perturbations are present.

In order to avoid artifacts in the output signal caused by abrupt changes in the threshold frequency and/or the determination whether or not significant non-acoustic perturbations are present, a detection delay means configured to keep the detection signal constant over a predetermined period and also a threshold frequency delay means configured to keep the threshold frequency constant over a predetermined period may be incorporated in embodiments of the microphone system.

Depending on the desired quality of the output signal more than one directional microphone with directivities better than the second directivity and a beamforming means configured to receive microphone signals from each of the directional microphones with a directivity better than the second directivity and to output a beamformed microphone signal that represents the first microphone signal generated from the microphone signals from each of the directional microphones with a directivity better than the second directivity may be employed.

The beamforming means combines the microphone signals from each of the directional microphones with a directivity better than the second directivity to obtain a beamformed signal with an increased signal-to-noise ratio as known in the art. If the microphones are used, e.g., to detect voice, the speech signals are deteriorated by acoustic background noise. Speech signals and noise signals overlap in the time and frequency domain. By using multiple microphones the different spatial characteristics of speech and noise can be exploited and in this way the background noise can be suppressed. In the disclosed microphone system, e.g., a delay-and-sum beamformer or a more elaborated beamformer combined with adaptive filtering (Griffiths-Jim beamforming) as known in the art may be used.

Furthermore, the microphone system according to one of the above described embodiments may comprise a single housing containing each of the microphones.

The invention also provides a handsfree set comprising the microphone system according to one of the above-described embodiments. In particular, in hands-free sets installed in vehicular cabins the intelligibility of speech signals can be improved by employment of the embodiments of the inventive microphone system.

The above mentioned object is also achieved by a method for reducing non-acoustic perturbations in microphone signals according to claim 12, comprising
detecting an audio signal by at least one directional microphone of a first directivity to obtain a first microphone signal;
detecting the audio signal by at least one directional microphone with a second directivity that is worse (lower) than the first directivity, in particular, an omni-directional microphone, to obtain a second microphone signal;
determining whether non-acoustic perturbations, in particular, wind noise, that exceed a predetermined level are present in the first and/or the second microphone signal;
outputting an output signal generated from the first microphone signal and/or the second microphone signal on the basis of the result of the determining whether non-acoustic perturbations that exceed a predetermined level are present in the first and/or the second microphone signal; and
determining time-dependently a threshold frequency above that only non-acoustic perturbations that do not exceed the predetermined level are detected and wherein the output signal is generated from a portion of the first microphone signal in a frequency range above the threshold frequency and from a portion of the second microphone signal in a frequency range below the threshold frequency.

The output signal may exclusively be generated from the first microphone signal, i.e. without any contribution from the second microphone signal, if non-acoustic perturbations that do exceed the predetermined level are not present and/or the output signal may exclusively be generated from the second microphone signal, i.e. without any contribution from the first microphone signal, if non-acoustic perturbations that exceed the predetermined level are present.

According to another example of the inventive method the output signal can be generated from a portion of the first microphone signal in a frequency range above a predetermined frequency and from a portion of the second microphone signal in a frequency range below the predetermined frequency, if the detection signal indicates that the non-acoustic perturbations exceed the predetermined level or if no detection signal is output.

The time- and frequency dependent processing results in a particularly efficient reduction of non-acoustic perturbations.

After a Fourier transformation or a subband decomposition of the microphone signals the phase values of the second microphone signal and/or amplitude values representing for each frequency the minimum of the respective spectral value of the first microphone signal and the respective spectral value of the second microphone signal may be used for the generation of the output signal for frequencies below the threshold frequency. In particular, the output signal may exhibit the same phase values as the second microphone signal and the same amplitudes per frequency as the minimum of the respective spectral value of the first microphone signal and the respective spectral value of the second microphone signal for frequencies below the threshold frequency.

It may be preferred that more than one directional microphone with a directivity better than the second directivity detect the audio signals and that the microphone signals from each of the directional microphones with directivities better than the second directivity are beamformed to output a beamformed microphone signal as the first microphone signal, in order to further enhance the quality of the output signal.

The result of the step of determining whether non-acoustic perturbations that exceed a predetermined level are present in the first and/or the second microphone signal may be kept constant over a predetermined period and/or the threshold frequency may be kept constant over another predetermined period that is usually different for the first mentioned period.

In order to avoid abrupt changes in the generation of output signals, a change from the first microphone signal to the second microphone signal as a basis for the generation of the output signal, e.g., may not be performed immediately, if wind noise is detected, whereas it was not detected before or vice versa. In particular, if suddenly wind noise is detected that was not present before, for some period, e.g., for some seconds, the processing is performed, as if still no wind noise (or wind noise below a predetermined level only) was present. Similar, if the determined threshold frequency suddenly changes, the combination from portions of the first and second microphone signals to gain the output signal is modified only after some period.

In the above mentioned embodiments of the herein disclosed method determining whether non-acoustic perturbations, in particular, wind noise, that exceed a predetermined level are present in the first and/or the second microphone signal may comprise comparing the power level of the first microphone signal with the power level of the second microphone signal (for details see above).

The invention also provides a computer program product comprising one or more computer readable media having computer-executable instructions for performing the steps of embodiments of the method for reducing non-acoustic perturbations in microphone signals as described above.

Additional features and advantages of the invention will be described with reference to the drawings. Similar elements in different Figures have been given the same reference numeral for purposes of consistency and simplicity.

Figure 1 shows an example of the inventive microphone system comprising one directional and one omni-directional microphone.

Figure 2 shows an example of the inventive microphone system comprising three directional microphones, one omni-directional microphone and a beamformer.

Figure 3 shows steps of an example of the inventive method for reducing wind noise in microphone signals comprising comparing the signal power of the microphone signals and outputting a signal of a directional microphone, if no wind noise is detected.

Figure 4 shows steps of an example of the inventive method for reducing wind noise in microphone signals comprising the determination of a threshold frequency and outputting a signal combined from the microphone signal from a directional microphone and the microphone signal from an omni-directional microphone.

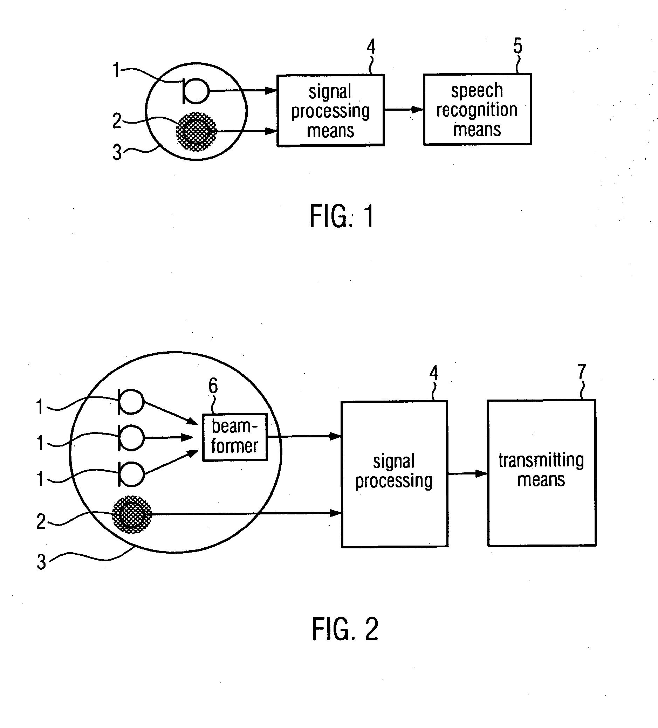

A relatively simple version of the herein disclosed microphone system is illustrated in Figure 1. A directional microphone 1 and an omni-directional microphone 2 are contained in one single microphone housing 3. The omni-directional microphone 2 can be provided with some mechanical wind protection means as a foam layer (in Figure 1 this is indicated by the shading). Both microphones detect audio signals and the corresponding microphone signals are input in a signal processing means 4. The signal processing means 4 comprises a detection means for determining whether or not wind noise above a predetermined level is present.

The check for significant wind noise is performed by comparing the short-time power of the microphone signals from the directional microphone 1 and the omni-directional microphone 2 with each other after having the frequency responses of the microphones adjusted to each other. A lower power of the microphone signal obtained by the omni-directional microphone 2 indicates the presence of wind noise. The level of wind noise can be estimated from the difference in power of the both microphone signals (the one from the directional microphone 1 and the one from the omni-directional microphone 2).

If no wind noise or wind noise below a predetermined level only is detected in the microphone signals the signal processing means 4 outputs the microphone signals obtained by the directional microphone. If, on the other hand, wind noise above the predetermined level is detected, microphone signals obtained by the omni-directional microphone are output by the signal processing means 4.

The switching between output of microphone signals obtained by the directional microphone to output of microphone signals obtained by the omni-directional microphone in dependence of wind noise is not carried out abruptly, if the wind noise exceeds or falls below the predetermined level. Rather, a counter is employed that starts counting once the wind noise exceeds the predetermined level and only after a predetermined number of counts detection of wind noise only below the predetermined level results in an output of microphone signals obtained by the directional microphone.

According to this example, the output signals are transmitted to a speech recognition means 5. The recognizing results obtained by the speech recognition means 5 are more reliable than in the case in that conventional microphone systems suffering from wind noise are used. The illustrated example of a microphone system comprising microphones 1 and 2, a microphone housing 3 and a signal processing means 4 is advantageously installed in a vehicular cabin to facilitate speech conversation.

Figure 2 shows a more elaborated example of the inventive microphone system. Here, a number of directional microphones 1, e.g. three directional microphones, and one omni-directional microphone 2 are employed. The housing 3 may also contain more than one omni-directional microphone 2. The omni-directional microphone 2 shows a less wind noise sensitivity as compared to the directional microphones 1. The latter may have different directivites.

The microphone signals of the directional microphones are input in a beamformer 6 that may be either a fixed beamformer or an adaptive one as they are known in the art.

The beamformer 6 outputs a beamformed microphone signal with an increased signal-to-noise ratio. The beamformed microphone signal as well as the microphone signal obtained by the omni-directional microphone are input in the signal processing means 4 that operates in a way as described above. According to the present example, the signal processing means 4 outputs an output signal to a wireless transmitter 7 that sends the converted signal to a remote subscriber. The present example is particularly suitable for handsfree telephony, e.g., in a vehicle.

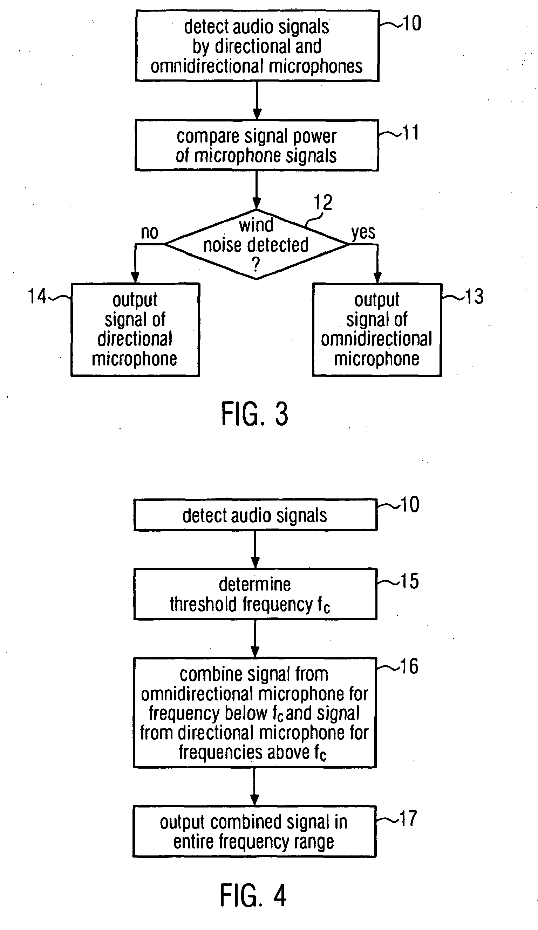

Figure 3 shows steps of an embodiment of the herein disclosed method for reduction of non-acoustic perturbation, in particular, wind noise in microphone signals. Audio signals, e.g., in a vehicular cabin, are detected by one or more directional and one or more omni-directional microphones 10. For example and convenience of description only, it is assumed that one directional microphone and one omni-directional microphone are used.

After the frequency responses of the employed microphones have been adjusted to each other wind noise can be detected by means of comparing 11 the signal power of the microphone signals. If the signal power of the omni-directional microphone is significantly lower by a predetermined value than the one of the directional microphone, it is decided that significant wind noise that deteriorates the microphone signal from the directional microphone is present.

Comparison is restricted to the low frequency range only, since wind noise represents low frequency perturbations.

If significant wind noise, i.e. wind noise above a predetermined level, is detected 12 the microphone signal from the omni-directional microphone is used to generate an output signal 13. If no significant wind noise is detected 12, the microphone signal from the directional microphone used to generate an output signal 14. According to this example in the case of absence of wind noise above the predetermined level, the microphone signal from the omni-directional microphone is not used for the generation of the output signal and if wind noise above the predetermined level is present, the microphone signal from the directional microphone is not used for the generation of the output signal.

According to an advantageous embodiment of the inventive method processing of the digitized and Fourier transformed microphone signals is carried out in a time-dependent as well as frequency-dependent manner in the frequency domain. As shown in Figure 4 audio signals are detected 10 by both an omni-directional microphone and a directional microphone. Again, multiple directional and omni-directional microphones may be employed. Depending on the level of wind noise a threshold frequency *f_{c}(n)* is determined 15 for a discrete time index n, below which non-acoustic perturbations, as wind noise, does occur. The threshold frequency *f_{c}* is time-dependently determined from the spectral short-time power of the microphone signals. To avoid artifacts caused by abrupt changes of the output signal, *f_{c}* is kept constant over some period, say, over one second.

For the frequency range above *f_{c}* the respective portion of the signal from the directional microphone is used to generate an output signal, since this frequency range is not affected by wind noise. Wind noise only affects the low frequency range, say, below 500 Hz to 1000 Hz. Thus, a combined signal comprising a portion of the microphone signal from the omni-directional microphone for frequencies below *f_{c}* and comprising a portion of the microphone signal from the directional microphone for frequencies above *f_{c}* is generated 16. Then, the combined signal showing a significantly enhanced quality is output in the entire available frequency range 17.

All previously discussed embodiments are not intended as limitations but serve as examples illustrating features and advantages of the invention. It is to be understood that some or all of the above described features can also be combined in different ways.

## Claims

1. Microphone system, comprising
at least one directional microphone (1) with a first directivity to obtain a first microphone signal;
at least one directional microphone (2) with a second directivity that is worse than the first directivity, in particular, an omni-directional microphone, to obtain a second microphone signal;
a detection means configured to receive the first and the second microphone signals and to output a detection signal indicating whether non-acoustic perturbations, in particular, wind noise, in the first and/or the second microphone signals exceed a predetermined level; and
a signal processing means (4) configured to output an output signal generated from the first microphone signal and/or the second microphone signal on the basis of the detection signal;
**characterized in** further comprising
a frequency determining means configured to determine time-dependently a threshold frequency above that only non-acoustic perturbations that do not exceed the predetermined level are detected and wherein the output signal is generated from a portion of the first microphone signal in a frequency range above the threshold frequency and from a portion of the second microphone signal in a frequency range below the threshold frequency.

2. Microphone system according to claim 1, wherein the output signal is exclusively generated from the first microphone signal, if the detection signal indicates that the non-acoustic perturbations do not exceed the predetermined level.

3. Microphone system according to claim 1 or 2, wherein the output signal is exclusively generated from the second microphone signal, if the detection signal indicates that the non-acoustic perturbations exceed the predetermined level.

4. Microphone system according to claim 1, wherein the output signal is genderated from a portion of the first microphone signal in a frequency range above a predetermined frequency and from a portion of the second microphone signal in a frequency range below the predetermined frequency, if the detection signal indicates that the non-acoustic perturbations exceed the predetermined level or if no detection signal is output.

5. Microphone system according to claim 1, wherein the signal processing means (4) is configured to generate the output signal for frequencies below the threshold frequency on the basis of the phase values of the second microphone signal and/or amplitude values representing for each frequency the minimum of the respective spectral value of the first microphone signal and the respective spectral value of the second microphone signal.

6. Microphone system according to one of the preceding claims with more than one directional microphone with directivities better than the second directivity, further comprising a beamforming means (6) configured to receive microphone signals from each of the directional microphones with a directivity better than the second directivity and to output a beamformed microphone signal as the first microphone signal.

7. Microphone system according to one of the preceding claims, further comprising a detection delay means configured to keep the detection signal constant over a predetermined period.

8. Microphone system according to one of the preceding claims, further comprising a threshold frequency delay means configured to keep the threshold frequency constant over a predetermined period.

9. Microphone system according to one of the preceding claims, wherein the detection means comprises a comparator configured to compare the power level of the first microphone signal with the one of the second microphone signal and wherein the detection signal is based on the comparison result.

10. Microphone system according to one of the preceding claims, further comprising a housing (3) containing each of the microphones.

11. Handsfree set comprising the microphone system according to one of the above claims.

12. Method for reducing non-acoustic perturbations in microphone signals, comprising
detecting an audio signal (10) by at least one directional microphone of a first directivity to obtain a first microphone signal;
detecting the audio signal (10) by at least one directional microphone with a second directivity that is worse than the first directivity, in particular, an omni-directional microphone, to obtain a second microphone signal;
determining (12) whether non-acoustic perturbations, in particular, wind noise, that exceed a predetermined level are present in the first and/or the second microphone signal; and
outputting (13, 14; 17) an output signal generated from the first microphone signal and/or the second microphone signal on the basis of the result of the determining whether non-acoustic perturbations that exceed a predetermined level are present in the first and/or the second microphone signal;
**characterized by**
determining (15) time-dependently a threshold frequency above that only non-acoustic perturbations that do not exceed the predetermined level are detected and wherein the output signal is generated (16) from a portion of the first microphone signal in a frequency range above the threshold frequency and from a portion of the second microphone signal in a frequency range below the threshold frequency.

13. Method according to claim 12, wherein the output signal is exclusively generated from the first microphone signal, if non-acoustic perturbations that exceed the predetermined level are not present.

14. Method according to claim 12 or 13, wherein the output signal is exclusively generated from the second microphone signal, if non-acoustic perturbations that exceed the predetermined level are present.

15. Method according to claim 12, wherein the output signal is generated (16) from a portion of the first microphone signal in a frequency range above a predetermined frequency and from a portion of the second microphone signal in a frequency range below the predetermined frequency, if the detection signal indicates that the non-acoustic perturbations exceed the predetermined level or if no detection signal is output.

16. Method according to claim 12, wherein the phase values of the second microphone signal and/or amplitude values representing for each frequency the minimum of the respective spectral value of the first microphone signal and the respective spectral value of the second microphone signal are used for the generation of the output signal for frequencies below the threshold frequency.

17. Method according to one of the claims 12 - 16, wherein more than one directional microphone with a directivity better than the second directivity detect the audio signals and the microphone signals from each of the directional microphones with directivities better than the second directivity are beamformed to output a beamformed microphone signal as the first microphone signal.

18. Method according to one of the claims 12 - 17, wherein the result of the determining whether non-acoustic perturbations that exceed a predetermined level are present in the first and/or the second microphone signal is kept constant over a predetermined period.

19. Method according to one of the claims 12 - 18, wherein the threshold frequency is kept constant over a predetermined period.

20. Method according to one of the claims 12 - 19, wherein determining (12) whether non-acoustic perturbations, in particular, wind noise, that exceed a predetermined level are present in the first and/or the second microphone signal comprises comparing the power level of the first microphone signal with the power level of the second microphone signal.

21. Computer program product comprising one or more computer readable media having computer-executable instructions for performing the steps of the method according to one of the Claims 12 - 20.

## Patentansprüche

1. Mikrofonsystem, umfassend
zumindest ein Richtmikrofon (1) mit einer ersten Richtcharakteristik zum Erhalten eines ersten Mikrofonsignals;
zumindest ein Richtmikrofon (2) mit einer zweiten Richtcharakteristik, die schlechter als die erste Richtcharakteristik ist, insbesondere ein ungerichtetes Mikrofon, zum Erhalten eines zweiten Mikrofonsignals;
eine Detektionseinrichtung, die dazu ausgebildet ist, das erste und zweite Mikrofonsignal zu empfangen und ein Detektionssignal auszugeben, das angibt, ob nicht-akustische Störungen, insbesondere ein Windgeräusch, in dem ersten und/oder zweiten Mikrofonsignal eine vorbestimmte Schwelle überschreiten; und
eine Signalverarbeitungseinrichtung (4), die dazu ausgebildet ist, ein Ausgabesignal auszugeben, das aus dem ersten Mikrofonsignal und/oder dem zweiten Mikrofonsignal auf der Grundlage des Detektionssignals erzeugt wird;
**dadurch gekennzeichnet, dass** es weiterhin umfasst
eine Einrichtung zur Bestimmung einer Frequenz, die dazu ausgebildet ist, zeitabhängig eine Grenzfrequenz zu bestimmen, oberhalb der lediglich nicht-akustische Störungen, die nicht die vorbestimmte Schwelle überschreiten, detektiert werden, und wobei das Ausgabesignal aus einem Teil des ersten Mikrofonsignals in einem Frequenzbereich oberhalb der Grenzfrequenz und aus einem Teil des zweiten Mikrofonsignals in einem Frequenzbereich unterhalb der Grenzfrequenz erzeugt wird.

2. Mikrofonsystem gemäß Anspruch 1, in dem das Ausgangssignal ausschließlich aus dem ersten Mikrofonsignal erzeugt wird, wenn das Detektionssignal anzeigt, dass die nicht-akustischen Störungen die vorbestimmte Schwelle nicht überschreiten.

3. Mikrofonsystem gemäß Anspruch 1 oder 2, in dem das Ausgangssignal ausschließlich aus dem zweiten Mikrofonsignal erzeugt wird, wenn das Detektionssignal anzeigt, dass die nicht-akustischen Störungen die vorbestimmte Schwelle überschreiten.

4. Mikrofonsystem gemäß Anspruch 1, in dem das Ausgangssignal aus einem Teil des ersten Mikrofonsignals in einem Frequenzbereich oberhalb einer vorbestimmten Frequenz und aus einem Teil des zweiten Mikrofonsignals in einem Frequenzbereich unterhalb der vorbestimmten Frequenz erzeugt wird, wenn das Detektionssignal anzeigt, dass die nicht-akustischen Störungen die vorbestimmte Schwelle überschreiten oder wenn kein Detektionssignal ausgegeben wird.

5. Mikrofonsystem gemäß Anspruch 1, in dem die Signalverarbeitungseinrichtung (4) dazu ausgebildet ist, das Ausgabesignal für Frequenzen unterhalb der Grenzfrequenz auf der Grundlage der Phasenwerte des zweiten Mikrofonsignals und/oder der Amplitudenwerte, die für jede Frequenz das Minimum des jeweiligen Spektralwerts des ersten Mikrofonsignals und des jeweiligen Spektralwerts des zweiten Mikrofonsignals darstellen, zu erzeugen.

6. Mikrofonsystem gemäß einem der vorhergehenden Ansprüche, mit mehr als einem Richtmikrofon mit Richtcharakteristiken besser als der zweiten Richtcharakteristik, weiterhin umfassend eine Beamformer-Einrichtrung (6), die dazu ausgebildet ist, Mikrofonsignale von jedem derjenigen Richtmikrofone mit einer Richtcharakteristik besser als der zweiten Richtcharakteristik zu empfangen und ein gebeamformtes Mikrofonsignal als das erste Mikrofonsignal auszugeben.

7. Mikrofonsystem gemäß einem der vorhergehenden Ansprüche, weiterhin umfassend eine Detektionsverzögerungseinrichtung, die dazu ausgebildet ist, das Detektionssignal über eine vorbestimmte Zeitdauer konstant zu halten.

8. Mikrofonsystem gemäß einem der vorhergehenden Ansprüche, weiterhin umfassend eine Grenzfrequenzverzögerungseinrichtung, die dazu ausgebildet ist, die Grenzfrequenz über eine vorbestimmte Zeitdauer konstant zu halten.

9. Mikrofonsystem gemäß einem der vorhergehenden Ansprüche, in dem die Detektionseinrichtung einen Komparator umfasst, der dazu ausgebildet ist, den Leistungspegel des ersten Mikrofonsignals mit demjenigen des zweiten Mikrofonsignals zu vergleichen, und wobei das Detektionssignal auf dem Vergleichsergebnis beruht.

10. Mikrofonsystem gemäß einem der vorhergehenden Ansprüche, weiterhin ein Gehäuse (3) umfassend, das jedes der Mikrofone enthält.

11. Freisprecheinrichtung, die das Mikrofonsystem gemäß einem der vorhergehenden Ansprüche umfasst.

12. Verfahren zum Verringern nicht-akustischer Störungen in Mikrofonsignalen, umfassend
Detektieren eines Audiosignals (10) mit zumindest einem ersten Richtmikrofon mit einer ersten Richtcharakteristik, um ein erstes Mikrofonsignal zu erhalten;
Detektieren des Audiosignals (10) mit zumindest einem zweiten Richtmikrofon mit einer zweiten Richtcharakteristik, die schlechter als die erste Richtcharakteristik ist, insbesondere mit einem ungerichteten Mikrofon, um ein zweites Mikrofonsignal zu erhalten;
Bestimmen (12), ob nicht-akustische Störungen, insbesondere ein Windgeräusch, die eine vorbestimmte Schwelle überschreiten, in dem ersten und/oder zweiten Mikrofonsignal vorhanden sind; und
Ausgeben (13, 14; 17) eines Ausgabesignals, das aus dem ersten Mikrofonsignal und/oder dem zweiten Mikrofonsignal auf der Grundlage des Ergebnisses des Bestimmens davon, ob nicht-akustische Störungen, die eine vorbestimmte Schwelle überschreiten, in dem ersten und/oder zweiten Mikrofonsignal vorhanden sind. erzeugt wird;
**gekennzeichnet durch**
zeitabhängiges Bestimmen (15) einer Grenzfrequenz, oberhalb der lediglich nicht-akustische Störungen, die nicht die vorbestimmte Schwelle überschreiten, detektiert werden, und wobei das Ausgabesignal aus einem Teil des ersten Mikrofonsignals in einem Frequenzbereich oberhalb der Grenzfrequenz und aus einem Teil des zweiten Mikrofonsignals in einem Frequenzbereich unterhalb der Grenzfrequenz erzeugt wird (16).

13. Verfahren gemäß Anspruch 12, in dem das Ausgangssignal ausschließlich aus dem ersten Mikrofonsignal erzeugt wird, wenn keine nicht-akustischen Störungen, die die vorbestimmte Schwelle überschreiten, vorhanden sind.

14. Verfahren gemäß Anspruch 12 oder 13, in dem das Ausgangssignal ausschließlich aus dem zweiten Mikrofonsignal erzeugt wird, wenn nicht-akustischen Störungen, die die vorbestimmte Schwelle überschreiten, vorhanden sind.

15. Verfahren gemäß Anspruch 12, in dem das Ausgangssignal aus einem Teil des ersten Mikrofonsignals in einem Frequenzbereich oberhalb einer vorbestimmten Frequenz und aus einem Teil des zweiten Mikrofonsignals in einem Frequenzbereich unterhalb der vorbestimmten Frequenz erzeugt wird (16), wenn das Detektionssignal anzeigt, dass die nicht-akustischen Störungen die vorbestimmte Schwelle überschreiten oder wenn kein Detektionsignal ausgegeben wird.

16. Verfahren gemäß Anspruch 12, in dem die Phasenwerte des zweiten Mikrofonsignals und/oder Amplitudenwerte, die für jede Frequenz das Minimum des jeweiligen Spektralwerts des ersten Mikrofonsignals und des jeweiligen Spektralwerts des zweiten Mikrofonsignals darstellen, zum Erzeugen des Ausgabesignals für Frequenzen unterhalb der Grenzfrequenz verwendet werden.

17. Verfahren gemäß einem der Ansprüche 12 - 16, in dem mehr als ein Richtmikrofon mit einer Richtcharakteristik besser als der zweiten Richtcharakteristik die Audiosignale detektieren und die Mikrofonsignale von jedem der Richtmikrofone mit Richtcharakteristiken besser als der zweiten Richtcharakteristik gebeamformt werden, um ein gebeamformtes Mikrofonsignal als das erste Mikrofonsignal auszugeben.

18. Verfahren gemäß einem der Ansprüche 12 - 17, in dem das Ergebnis des Bestimmens davon, ob nicht-akustische Störungen, die eine vorbestimmte Schwelle überschreiten, in dem ersten und/oder zweiten Mikrofonsignal vorhanden sind, über eine vorbestimmte Zeitdauer konstant gehalten wird.

19. Verfahren gemäß einem der Ansprüche 12 - 18, in dem die Grenzfrequenz über eine vorbestimmte Zeitdauer konstant gehalten wird.

20. Verfahren gemäß einem der Ansprüche 12 - 19, in dem das Bestimmen (12) davon, ob nicht-akustische Störungen, insbesondere ein Windgeräusch, die eine vorbestimmte Schwelle überschreiten, in dem ersten und/oder zweiten Mikrofonsignal vorhanden sind, das Vergleichen des Leistungspegels des ersten Mikrofonsignals mit dem Leistungspegel des zweiten Mikrofonsignals umfasst.

21. Computerprogrammprodukt mit einem oder mehreren computerlesbaren Medien, die computerausführbare Anweisungen zum Ausführen der Schritte des Verfahrens gemäß einem der Ansprüche 12 - 20 aufweisen.

## Revendications

1. Système de microphone, comprenant :
au moins un microphone directionnel (1) présentant une première directivité pour obtenir un premier signal de microphone,
au moins un microphone directionnel (2) présentant une deuxième directivité qui est plus mauvaise que la première directivité, en particulier un microphone omnidirectionnel, pour obtenir un second signal de microphone,
un moyen de détection configuré pour recevoir les premier et second signaux de microphone et pour fournir en sortie un signal de détection indiquant si des perturbations non acoustiques, en particulier un bruit caractéristique du vent, dans le premier et/ou le second signal de microphone dépassent un niveau prédéterminé, et
un moyen de traitement du signal (4) configuré pour fournir en sortie un signal généré à partir du premier signal de microphone et/ou du second signal de microphone sur la base du signal de détection,
**caractérisé en ce qu'**il comprend en outre
un moyen de détermination de fréquence configuré pour déterminer en fonction du temps un seuil de fréquence au-dessus duquel sont seules détectées des perturbations non acoustiques qui ne dépassent pas le niveau prédéterminé et où le signal de sortie est généré à partir d'une portion du premier signal de microphone dans une plage de fréquences au-dessus de la fréquence seuil et à partir d'une portion du second signal de microphone dans une plage de fréquences située en dessous de la fréquence seuil.

2. Système de microphone selon la revendication 1, dans lequel le signal de sortie est exclusivement généré à partir du premier signal de microphone si le signal de détection indique que les perturbations non acoustiques ne dépassent pas le niveau prédéterminé.

3. Système de microphone selon la revendication 1 ou 2, dans lequel le signal de sortie est exclusivement généré à partir du second signal de microphone si le signal de détection indique que les perturbations non acoustiques dépassent le niveau prédéterminé.

4. Système de microphone selon la revendication 1, dans lequel le signal de sortie est généré à partir d'une portion du premier signal de microphone dans une plage de fréquences au-dessus d'une fréquence prédéterminée et à partir d'une portion du second signal de microphone dans une plage de fréquences en dessous de la fréquence prédéterminée, si le signal de détection indique que les perturbations non acoustiques dépassent le niveau prédéterminé ou bien si aucun signal de détection n'est fourni en sortie.

5. Système de microphone selon la revendication 1, dans lequel le moyen de traitement du signal (4) est configuré pour générer le signal de sortie pour des fréquences situées en dessous de la fréquence seuil sur la base des valeurs de phase du second signal de microphone et/ou des valeurs d'amplitude représentant, pour chaque fréquence, le minimum de la valeur spectrale respective du premier signal de microphone et de la valeur spectrale respective du second signal de microphone.

6. Système de microphone selon l'une des revendications précédentes comportant plus d'un seul microphone directionnel présentant des directivités meilleures que la deuxième directivité, comprenant de plus un moyen de formation de faisceau (6) configuré pour recevoir des signaux de microphone provenant de chacun des microphones directionnels présentant une directivité meilleure que la deuxième directivité, et pour fournir en sortie un signal de microphone formé en faisceau en tant que premier signal de microphone.

7. Système de microphone selon l'une des revendications précédentes, comprenant en outre un moyen de délai de détection configuré pour maintenir constant le signal de détection sur un intervalle de temps prédéterminé.

8. Système de microphone selon l'une des revendications précédentes, comprenant en outre un moyen de délai de fréquence de seuil configuré pour maintenir constante la fréquence de seuil sur un intervalle de temps prédéterminé.

9. Système de microphone selon l'une des revendications précédentes, dans lequel le moyen de détection comprend un comparateur configuré pour comparer le niveau de puissance du premier signal de microphone à celui du second signal de microphone, et où le signal de détection est fondé sur le résultat de comparaison.

10. Système de microphone selon l'une des revendications précédentes comprenant en outre un boîtier (3) contenant chacun des microphones.

11. Ensemble mains libres comprenant le système de microphone conforme à l'une des revendications précédentes.

12. Procédé permettant de réduire des perturbations non acoustiques dans des signaux de microphone, comprenant
la détection d'un signal audio (10) par au moins un microphone directionnel présentant une première directivité pour obtenir un premier signal de microphone,
la détection du signal audio (10) par au moins un microphone directionnel présentant une deuxième directivité qui est plus mauvaise que la première directivité, en particulier un microphone omnidirectionnel, pour obtenir un second signal de microphone,
la détermination (12) de ce que des perturbations non acoustiques, en particulier du bruit caractéristique du vent, qui dépassent un niveau prédéterminé sont présentes dans le premier et/ou le second signal de microphone, et
la fourniture en sortie (13, 14 ; 17) d'un signal de sortie généré à partir du premier signal de microphone et/ou du second signal de microphone sur la base du résultat de la détermination de ce que des perturbations non acoustiques qui dépassent un niveau prédéterminé sont présentes dans le premier et/ou le second signal de microphone,
**caractérisé par**
la détermination (15) en fonction du temps d'une fréquence seuil au-dessus de laquelle seules sont détectées des perturbations non acoustiques qui ne dépassent pas le niveau prédéterminé, et où le signal de sortie est généré (16) à partir d'une portion du premier signal de microphone dans une plage de fréquences située au-dessus de la fréquence seuil, et à partir d'une portion du second signal de microphone dans une plage de fréquences en dessous de la fréquence seuil.

13. Procédé selon la revendication 12, dans lequel le signal de sortie est exclusivement généré à partir du premier signal de microphone si ne sont pas présentes des perturbations non acoustiques qui dépassent le niveau prédéterminé.

14. Procédé selon la revendication 12 ou 13, dans lequel le signal de sortie est exclusivement généré à partir du second signal de microphone si sont présentes les perturbations non acoustiques qui dépassent le niveau prédéterminé.

15. Procédé selon la revendication 12, dans lequel le signal de sortie est généré (16) à partir d'une portion du premier signal de microphone dans une plage de fréquences située au-dessus d'une fréquence prédéterminée et à partir d'une portion du second signal de microphone dans une plage de fréquences en dessous de la fréquence prédéterminée si le signal de détection indique que les perturbations non acoustiques dépassent le niveau prédéterminé ou bien si aucun signal de détection n'est fourni en sortie.

16. Procédé selon la revendication 12, dans lequel les valeurs de phase du second signal de microphone et/ou les valeurs d'amplitude représentant, pour chaque fréquence, le minimum de la valeur spectrale respective du premier signal de microphone et de la valeur spectrale respective du second signal de microphone, sont utilisées pour la génération du signal de sortie pour des fréquences situées en dessous de la fréquence seuil.

17. Procédé selon l'une des revendications 12 à 16, dans lequel plus d'un seul microphone directionnel, présentant une directivité meilleure que la deuxième directivité, détecte les signaux audio, et les signaux de microphone provenant de chacun des microphones directionnels présentant des directivités meilleures que la deuxième directivité sont formés en faisceau dans le but de fournir en sortie un signal de microphone formé en faisceau en tant que premier signal de microphone.

18. Procédé selon l'une des revendications 12 à 17, dans lequel est maintenu constant sur un intervalle de temps prédéterminé le résultat de la détermination de ce que des perturbations non acoustiques qui dépassent un niveau prédéterminé sont présentes dans le premier et/ou le second signal de microphone.

19. Procédé selon l'une des revendications 12 à 18, dans lequel la fréquence seuil est maintenue constante sur un intervalle de temps prédéterminé.

20. Procédé selon l'une des revendications 12 à 19, dans lequel la détermination (12), de ce que des perturbations non acoustiques, en particulier du bruit caractéristique du vent, qui dépassent un niveau prédéterminé, sont présentes dans le premier et/ou le second signal de microphone, comprend la comparaison du niveau de puissance du premier signal de microphone au niveau de puissance du second signal de microphone.

21. Produit de programme informatique comprenant un ou plusieurs supports pouvant être lus par ordinateur comportant des instructions exécutables par ordinateur dans le but de réaliser les étapes du procédé conformément à l'une des revendications 12 à 20.
